# EUROPÄISCHE PATENTSCHRIFT

(11) **EP 2 780 207 B1**
(45) Veröffentlichungstag und Bekanntmachung des Hinweises auf die Patenterteilung: **26.02.2020**
(21) Anmeldenummer: 12775629.4
(22) Anmeldetag: 17.09.2012
(51) Int. Cl.: B60W 30/02, B60W 50/00, B60W 30/188, B60W 50/14

(54) **VORRICHTUNG UND VERFAHREN ZUM BETREIBEN EINES FAHRZEUGS**
DEVICE AND METHOD FOR OPERATING A VEHICLE
DISPOSITIF ET PROCÉDÉ PERMETTANT DE FAIRE FONCTIONNER UN VÉHICULE

(30) Priorität: 15.11.2011 DE 102011086336
(43) Veröffentlichungstag der Anmeldung: 24.09.2014
(73) Patentinhaber: Robert Bosch GmbH, 70442 Stuttgart (DE)
(72) Erfinder: NORDBRUCH, Stefan, 70806 Kornwestheim (DE); STOLZ, Wolfgang, 73033 Goeppingen (DE); LAPP, Andreas, 71732 Tamm (DE); KNOOP, Michael, 71638 Ludwigsburg (DE); SOMMER, Tino, 70771 Leinfelden (DE); POECHMUELLER, Werner, 31139 Hildesheim (DE)
(86) Internationale Anmeldenummer: PCT/EP2012/068223
(87) Internationale Veröffentlichungsnummer: WO 2013/072096

(56) Entgegenhaltungen:
- WO-A1-2004/014700
- WO-A2-2007/054324
- DE-A1- 10 025 493
- DE-A1-102009 002 521
- DE-A1-102009 039 614
- DE-A1-102010 015 423
- JP-A- 3 279 021

## Beschreibung

Die Erfindung betrifft eine Vorrichtung und ein Verfahren zum Betreiben eines Fahrzeugs. Die Erfindung betrifft ferner ein System zum Betreiben eines Fahrzeugs sowie ein Computerprogramm.

### Stand der Technik

Aus den Offenlegungsschriften DE 10 2008 019 174, DE 10 2008 034 910 und DE 10 2009 040 682 sind Verfahren zur vorausschauenden Beeinflussung einer Fahrzeuggeschwindigkeit, eines Fahrzeuggetriebes und einer Fahrzeugbremse bekannt, um eine benötigte Treibstoffmenge entlang einer Fahrstrecke zu reduzieren.

Die Offenlegungsschrift WO 2004/014700 A1 zeigt ein Computersystem und ein Verfahren zur Steuerung, insbesondere zur koordinierten Antriebsstrangsteuerung eines Kraftfahrzeugs.

Die Offenlegungsschrift DE 10 2009 002521 A1 offenbart ein Verfahren zum Betreiben eines Fahrzeugs in einem Segel- oder Rollmodus. Beim aktiven Eingriff eines Steuergeräts eines Sicherheits- oder Stabilitätssystems in die Steuerung einer Bremseinrichtung oder in eine Motorsteuerung wird die Segel- bzw. Rollfunktion zumindest während des direkten Eingriffs deaktiviert bzw. kein Start einer Segel- oder Rollphase zugelassen.

### Offenbarung der Erfindung

Die der Erfindung zugrunde liegende Aufgabe kann darin gesehen werden, eine verbesserte Vorrichtung und ein verbessertes Verfahren zum Betreiben eines Fahrzeugs bereitzustellen.

Die der Erfindung zugrunde liegende Aufgabe kann auch darin gesehen werden, ein entsprechendes System zum Betreiben eines Fahrzeugs sowie ein entsprechendes Computerprogramm bereitzustellen.

Diese Aufgaben werden mittels des jeweiligen Gegenstands der unabhängigen Ansprüche gelöst. Vorteilhafte Ausgestaltungen sind Gegenstand von jeweils abhängigen Unteransprüchen.

Nach einem Aspekt wird eine Vorrichtung zum Betreiben eines Fahrzeugs bereitgestellt. Die Vorrichtung umfasst ein Fahrzeugbewegungsmodul zum Bilden von Steuersignalen für ein Steuergerät eines Stellsystems des Fahrzeugs. Das heißt also insbesondere, dass das Fahrzeugbewegungsmodul Steuersignale bildet, welche an ein Steuergerät eines Stellsystems des Fahrzeugs gesandt werden. Das Steuergerät steuert dann entsprechend der Steuersignale das Stellsystem des Fahrzeugs.

Ferner umfasst die Vorrichtung ein Energieverwaltungsmodul zum Verwalten einer für einen Fahrzeugbetrieb zur Verfügung stehenden Energie. Hierbei ist das Energieverwaltungsmodul eingerichtet, weitere Steuersignale für das Steuergerät in Abhängigkeit von der zur Verfügung stehenden Energie zu bilden. Das heißt also insbesondere, dass das Steuergerät entsprechend der weiteren Steuersignale das Stellsystem steuern kann.

Ferner umfasst die Vorrichtung einen Priorisierer zum Priorisieren der Steuersignale gegenüber den weiteren Steuersignalen in Abhängigkeit einer Fahrzeuglage für eine Stabilisierung des Fahrzeugs.

Gemäß einem anderen Aspekt wird ein Verfahren zum Betreiben eines Fahrzeugs bereitgestellt. Hierbei bildet ein Fahrzeugbewegungsmodul Steuersignale für ein Steuergerät eines Stellsystems des Fahrzeugs. Ein Energieverwaltungsmodul zum Verwalten einer für einen Fahrzeugbetrieb zur Verfügung stehenden Energie bildet weitere Steuersignale für das Steuergerät in Abhängigkeit von der zur Verfügung stehenden Energie. Abhängig von einer Fahrzeuglage und/oder eines Fahrzeugbewegungszustands werden die Steuersignale gegenüber den weiteren Steuersignalen für eine Stabilisierung des Fahrzeugs priorisiert.

Nach einem anderen Aspekt wird ein System zum Betreiben eines Fahrzeugs bereitgestellt. Das System umfasst die Vorrichtung zum Betreiben eines Fahrzeugs, wobei der Priorisierer in das Fahrzeugbewegungsmodul integriert ist und das Fahrzeugbewegungsmodul eine Stellerschnittstelle für das Steuergerät und eine Energieverwaltungsschnittstelle für das Energieverwaltungsmodul umfasst. An der Stellerschnittstelle ist das Steuergerät des Stellsystems angekoppelt bzw. angeschlossen. An der Energieverwaltungsschnittstelle ist das Energieverwaltungsmodul angekoppelt bzw. angeschlossen.

Nach noch einem weiteren Aspekt wird ein Computerprogramm bereitgestellt, welches Programmcode zur Ausführung des Verfahrens zum Betreiben eines Fahrzeugs umfasst, wenn das Computerprogramm auf einem Computer ausgeführt wird.

Die Erfindung umfasst also insbesondere den Gedanken, die Steuersignale, welche mittels des Fahrzeugbewegungsmoduls gebildet werden, gegenüber den weiteren Steuersignalen, welche mittels des Energieverwaltungsmoduls gebildet werden, in Abhängigkeit einer Fahrzeuglage und/oder eines Fahrzeugbewegungszustands für eine Stabilisierung des Fahrzeugs zu priorisieren. Das heißt also insbesondere, dass die Steuersignale des Fahrzeugbewegungsmoduls bevorzugt behandelt werden im Vergleich zu den weiteren Steuersignalen des Energieverwaltungsmoduls. Das heißt also insbesondere, dass die Steuersignale des Fahrzeugbewegungsmoduls bevorzugt im Vergleich zu den weiteren Steuersignalen des Energieverwaltungsmoduls an das Steuergerät des Stellsystems gesendet werden.

So kann das Energieverwaltungsmodul beispielsweise eine bestimmte Fahrzeugführungsstrategie berechnen, um auf einer vorbestimmten Fahrstrecke einen Treibstoffmengen- oder Elektroenergieverbrauch zu minimieren. Entsprechend bildet das Energieverwaltungsmodul weitere Steuersignale. Diese Fahrzeugführungsstrategie kann aber beispielsweise zu einer instabilen Lage des Fahrzeugs führen. Das Fahrzeugbewegungsmodul kann dann insbesondere Steuersignale für das Steuergerät bilden, so dass mittels eines entsprechenden Eingriffs des Stellsystems in einen Fahrzeugbetrieb das Fahrzeug bzw. die Fahrzeuglage wieder stabilisiert werden kann. Diese Steuersignale, welche zu einer Stabilisierung des Fahrzeugs führen, werden insofern priorisiert und bevorzugt an das Steuergerät gesendet. Erst wenn insbesondere das Fahrzeug ausreichend stabilisiert ist, kann vorgesehen sein, dass weitere Steuersignale des Energieverwaltungsmoduls für eine entsprechend minimierte Fahrzeugführungsstrategie an das Steuergerät des Stellsystems gesendet werden. Beispielsweise kann auch der Fall auftreten, dass sich das Fahrzeug in einer instabilen Lage befindet. In einem solchen Fall ist es zunächst wichtiger, das Fahrzeug zu stabilisieren, bevor eine Fahrzeugführungsstrategie angewandt wird, um einen Treibstoffmengen- oder Elektroenergieverbrauch zu minimieren.

Dadurch also, dass Steuersignale für ein Steuergerät eines Stellsystems, welche zu einer Stabilisierung des Fahrzeugs führen, den weiteren Steuersignalen eines Energieverwaltungsmoduls, welche zu einem minimierten Treibstoffmengenverbrauch führen, priorisiert werden, wird in vorteilhafter Weise eine Sicherheit eines Fahrzeugbetriebs erheblich erhöht.

Eine Stabilisierung bzw. eine Stabilisation im Sinne der vorliegenden Erfindung bedeutet insbesondere, dass das Fahrzeug mittels eines Eingriffs eines Stellsystems des Fahrzeugs in einen Fahrzeugbetrieb in einen stabilen Zustand gebracht wird und/oder in einem solchen Zustand gehalten wird.

Ein Stellsystem im Sinne der vorliegenden Erfindung bezeichnet insbesondere ein System, welches in einen Fahrzeugbetrieb und/oder eine Fahrzeugführung eingreifen kann. Ein Stellsystem kann beispielsweise ein Lenkungssystem, insbesondere ein elektrisches Servolenkungssystem, sein. Ein Stellsystem kann beispielsweise auch ein Triebstrangsystem sein. Ein Stellsystem kann vorzugsweise ein Fahrdynamikregelungssystem sein, was auch als elektronisches Stabilitätsprogramm (ESP) bekannt ist. Ein Stellsystem kann beispielsweise auch ein Antiblockiersystem oder ein Antriebsschlupfregelungssystem sein. Ein Stellsystem kann beispielsweise ein Bremssystem oder ein Antriebssystem des Fahrzeugs sein. Ein Stellsystem bezeichnet also insbesondere ein System, welches sich gerichtete Anforderungen an eine Fahrzeugbewegung wie beispielsweise eine Beschleunigung, ein Bremsen und/oder ein Lenken umsetzt, um das Fahrzeug entsprechend zu führen.

Ein Steuergerät im Sinne der vorliegenden Erfindung kann auch als eine Steuerung bezeichnet werden und kann insbesondere in Hardware und/oder in Software ausgeführt sein. Solche Steuerungen steuern insbesondere die an sie angeschlossenen Stellsysteme des Fahrzeugs.

Nach einer Ausführungsform können die Steuersignale und/oder die weiteren Steuersignale basierend auf Sensorsignalen von Umfeldsensoren zum sensorischen Erfassen eines Fahrzeugumfelds gebildet werden. Das heißt also insbesondere, dass basierend auf einem sensorisch erfassten Fahrzeugumfeld entsprechend in einen Fahrzeugbetrieb mittels Ansteuerung der Stellsysteme eingegriffen werden kann.

Sensorsignale von Umfeldsensoren im Sinne der vorliegenden Erfindung umfassen insbesondere Umfeldsensordaten, welche dem sensorisch erfassten Fahrzeugumfeld entsprechen. Solche Umfeldsensordaten können insbesondere auch als Fahrzeugumfelddaten bezeichnet werden und umfassen insbesondere Informationen über das Fahrzeugumfeld. Solche Informationen können beispielsweise physische Objekte betreffen. Ein physisches Objekt kann beispielsweise ein anderes Fahrzeug, ein Fußgänger, ein Verkehrszeichen, eine Signalanlage oder Begrenzungspfosten der Straße sein. Insbesondere umfassen die Fahrzeugumfelddaten physische Merkmale bzw. Eigenschaften der Straße wie beispielsweise eine Straßenbreite, eine Fahrbahnbreite, Kurvenradien und/oder Abfahrten. Insbesondere sind bei stationären physischen Objekten auch die jeweilige Position und Abmaßungen in den Fahrzeugumfelddaten gespeichert. Fahrzeugumfelddaten können insbesondere auch Informationen über aktuelle Gegebenheiten umfassen, wie beispielsweise, dass sich an der entsprechenden Position eine Baustelle mit veränderten Straßeneigenschaften befindet. Fahrzeugumfelddaten können insbesondere auch Fahrbahnspurdaten umfassen, welche beispielsweise die Information über eine Fahrbahnlinienfarbe umfassen. Fahrzeugumfelddaten im Sinne der vorliegenden Erfindung umfassen insbesondere Bilder und/oder Videos. Den Fahrzeugumfelddaten ist insbesondere eine entsprechende Position zugeordnet, welche insbesondere mittels eines Global-Positioning-System (GPS)-Sensors bestimmt werden kann.

Umfeldsensoren im Sinne der vorliegenden Erfindung können beispielsweise Radarsensoren, Videosensoren, insbesondere Videosensoren einer 3D-Kamera oder eines Umfeldkamerasystems zum bildlichen Erfassen eines 360°-Umfelds des Fahrzeugs, oder Ultraschallsensoren umfassen. Umfeldsensoren können beispielsweise Lidar-Sensoren, Flugzeitsensoren und/oder ein Fotomischdetektoren, auf englisch auch Photonic Mixing Device-(PMD)-Sensoren genannt, umfassen. Ein PMD-Sensor kann insbesondere als ein Bildsensor in TOF-Kameras verwendet werden, wobei TOF für "Time of Flight" steht, und auf Lichtlaufzeitverfahren basiert. Bei der Videokamera kann es sich insbesondere um eine Stereovideokamera handeln.

Nach einer Ausführungsform ist der Priorisierer in das Fahrzeugbewegungsmodul integriert, wobei das Fahrzeugbewegungsmodul insbesondere eine Stellerschnittstelle für das Steuergerät und insbesondere eine Energieverwaltungsschnittstelle für das Energieverwaltungsmodul umfasst. An eine solche Stellerschnittstelle kann dann in vorteilhafter Weise das Steuergerät angeschlossen bzw. angekoppelt werden, so dass in vorteilhafter Weise die Steuersignale bzw. die weiteren Steuersignale an das Steuergerät gesendet werden können. An die Energieverwaltungsschnittstelle kann dann insbesondere in vorteilhafter Weise das Energieverwaltungsmodul angeschlossen bzw. angekoppelt werden, so dass die weiteren Steuersignale des Energieverwaltungsmoduls in vorteilhafter Weise an das Fahrzeugbewegungsmodul gesendet werden können. Dadurch, dass der Priorisierer in dem Fahrzeugbewegungsmodul integriert ist, kann dann insbesondere in vorteilhafter Weise eine Priorisierung der Steuersignale gegenüber den weiteren Steuersignalen direkt in dem Fahrzeugbewegungsmodul durchgeführt werden. Eine solche Anordnung weist insbesondere den Vorteil auf, dass sie kompakt aufgebaut werden kann. Ferner sind auch entsprechende Signalleitungen nicht unnötig lang ausgeführt, so dass eine entsprechende Reaktionszeit in vorteilhafter Weise erheblich verkürzt ist. Vorzugsweise können auch mehrere Stellerschnittstellen für mehrere Steuergeräte vorgesehen sein. Dadurch können in vorteilhafter Weise mehrere Steuergeräte von mehreren Stellsystemen an das Fahrzeugbewegungsmodul angekoppelt bzw. angeschlossen werden.

In einer anderen Ausführungsform umfasst das Energieverwaltungsmodul ein Datenerfassungsmodul. Das Datenerfassungsmodul erfasst insbesondere Daten, welche für eine Berechnung einer Fahrzeugführungsstrategie relevant sind. Solche Daten können beispielsweise Umfeldsensordaten und/oder Navigationsdaten umfassen. Das Datenerfassungsmodul ist insbesondere eingerichtet, den erfassten Daten einen Gütefaktor zuzuordnen, wobei das Energieverwaltungsmodul vorzugsweise ausgebildet ist, abhängig von den erfassten Daten und von dem zugeordneten Gütefaktor die weiteren Steuersignale zu bilden. Das heißt also insbesondere, dass das Energieverwaltungsmodul für eine Berechnung einer Fahrzeugführungsstrategie relevante Daten erfasst, welchen vorzugsweise ein Gütefaktor zugeordnet wird, wobei die weiteren Steuersignale beispielsweise abhängig von den erfassten Daten und dem zugeordneten Gütefaktor gebildet werden. Das heißt also insbesondere, dass die Daten, welche die Grundlage für das Bilden der weiteren Steuersignale für eine Fahrzeugführungsstrategie zur Minimierung eines Treibstoffmengenverbrauchs bilden, nach Signalqualität und Anzahl eingestuft werden können. Entsprechend können dann weitere Steuersignale gebildet werden, welche das Steuergerät bzw. die Steuergeräte des Stellsystems bzw. der Stellsysteme so steuern, dass nur ein bestimmter Funktionsumfang des Stellsystems frei geschaltet wird. Beispielsweise kann auch vorgesehen sein, dass ein Funktionsumfang des Stellsystems gar nicht frei geschaltet wird. So werden beispielsweise höherwertige Daten, welche beispielsweise mittels eines qualitativ hochwertigen Umfeldsensors zum sensorischen Erfassen eines Fahrzeugumfelds gebildet wurden, stärker für die Berechnung einer Fahrzeugführungsstrategie berücksichtigt als qualitativ niederwertige Daten.

In einer anderen Ausführungsform umfasst das Energieverwaltungsmodul eine Mensch-Maschinen-Schnittstelle zum Bereitstellen einer Fahrzeugführungsanweisung entsprechend der zur Verfügung stehenden Energie. Das heißt also insbesondere, dass das Energieverwaltungsmodul in vorteilhafter Weise einem Fahrer eine Fahrzeugführungsanweisung bereitstellen kann, so dass der Fahrer basierend auf dieser Fahrzeugführungsanweisung das Fahrzeug entsprechend steuern kann, um in vorteilhafter Weise einen Treibstoffmengen- oder Elektroenergieverbrauch zu minimieren.

Nach einer anderen Ausführungsform ist ein Fahrzeugbewegungs- und/oder Lagesensor vorgesehen, welcher ausgebildet ist, einen Fahrzeugbewegungszustand und/oder eine Fahrzeuglage zu erfassen. Vorzugsweise können mehrere Bewegungs- oder Lagesensoren zum sensorischen Erfassen einer Fahrzeuglage vorgesehen sein. Der Bewegungs- und der Lagesensor sind insbesondere mit dem Fahrzeugbewegungsmodul verbunden, so dass entsprechende Sensorsignale des Bewegungs- und des Lagesensors an das Fahrzeugbewegungsmodul gesendet werden können. Dadurch wird das Fahrzeugbewegungsmodul in vorteilhafter Weise in Kenntnis über den momentanen Fahrzeugbewegungszustand und über die momentane Fahrzeuglage gesetzt.

Die Erfindung wird im Folgenden anhand von bevorzugten Ausführungsbeispielen näher erläutert. Hierbei zeigen
- Fig. 1: eine Vorrichtung zum Betreiben eines Fahrzeugs,
- Fig. 2: ein Ablaufdiagramm eines Verfahrens zum Betreiben eines Fahrzeugs,
- Fig. 3: eine weitere Vorrichtung zum Betreiben eines Fahrzeugs,
- Fig. 4: ein System zum Betreiben eines Fahrzeugs und
- Fig. 5: ein weiteres System zum Betreiben eines Fahrzeugs.

Im Folgenden werden für gleiche Merkmale gleiche Bezugszeichen verwendet.

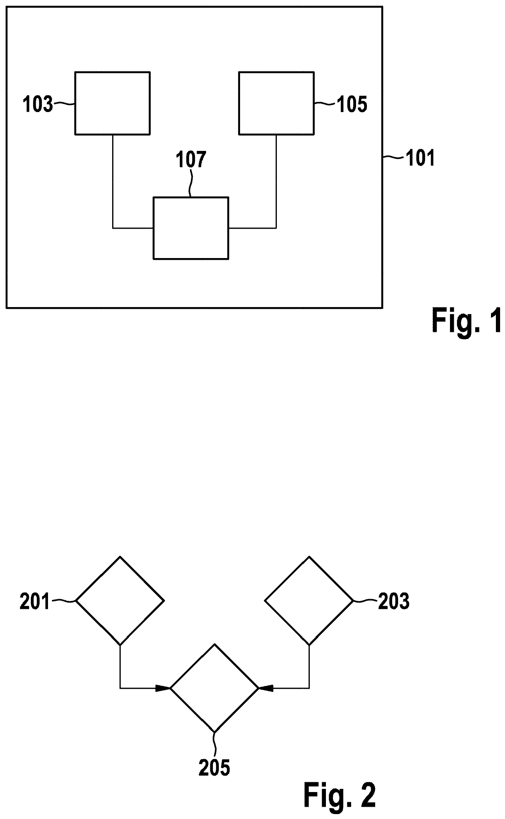

Fig. 1 zeigt eine Vorrichtung 101 zum Betreiben eines Fahrzeugs (nicht gezeigt). Die Vorrichtung 101 umfasst ein Fahrzeugbewegungsmodul 103 zum Bilden von Steuersignalen für ein nicht gezeigtes Steuergerät eines nicht gezeigten Stellsystems des Fahrzeugs. Ferner umfasst die Vorrichtung 101 ein Energieverwaltungsmodul 105 zum Verwalten einer für einen Fahrzeugbetrieb zur Verfügung stehenden Energie, wobei das Energieverwaltungsmodul 105 ausgebildet bzw. eingerichtet ist, weitere Steuersignale für das Steuergerät in Abhängigkeit von der zur Verfügung stehenden Energie zu bilden. Die Vorrichtung 101 umfasst ferner einen Priorisierer 107 zum Priorisieren der Steuersignale gegenüber den weiteren Steuersignalen in Abhängigkeit einer Fahrzeuglage für eine Stabilisierung des Fahrzeugs.

Dadurch wird in vorteilhafter Weise eine Stabilisierung des Fahrzeugs mit einer höheren Priorität durchgeführt als die Durchführung einer Fahrzeugführungsstrategie für eine Energieminimierung bzw. für eine Reduzierung eines Treibstoffmengen- oder Elektroenergieverbrauchs. Es findet also eine architekturelle Aufteilung zwischen dem Fahrzeugbewegungsmodul, welches insbesondere ein reines Fahrzeugbewegungsmodell bereitstellt, und einem Energieverwaltungsmodul statt, welches insbesondere eine vorausschauende energetische Bewertung einer Betriebsstrategie bzw. Fahrzeugführungsstrategie bereitstellt. Beide Module kommunizieren über entsprechende Schnittstellen miteinander.

Fig. 2 zeigt ein Ablaufdiagramm eines Verfahrens zum Betreiben eines Fahrzeugs. In einem Schritt 201 werden mittels eines Fahrzeugbewegungsmoduls Steuersignale für ein Steuergerät eines Stellsystems des Fahrzeugs gebildet.

Gemäß einem Schritt 203 werden weitere Steuersignale mittels eines Energieverwaltungsmoduls zum Verwalten einer für einen Fahrzeugbetrieb zur Verfügung stehenden Energie für das Steuergerät in Abhängigkeit von der zur Verfügung stehenden Energie gebildet. Die Schritte 201 und 203 können vorzugsweise zeitlich parallel oder nacheinander durchgeführt werden. Gemäß einem Schritt 205 werden abhängig von einer Fahrzeuglage die Steuersignale des Fahrzeugbewegungsmoduls gegenüber den weiteren Steuersignalen des Energieverwaltungsmoduls priorisiert, um in vorteilhafter Weise eine Stabilisierung des Fahrzeugs durchzuführen.

In einer nicht gezeigten Ausführungsform kann vorgesehen sein, dass das Energieverwaltungsmodul für eine Berechnung einer Fahrzeugführungsstrategie, um einen Energieverbrauch, beispielsweise einen Treibstoffmengenverbrauch, zu reduzieren, entsprechend relevante Daten erfasst. Diesen Daten wird insbesondere ein Gütefaktor zugeordnet, wobei die weiteren Steuersignale abhängig von den erfassten Daten und dem zugeordneten Gütefaktor gebildet werden. Beispielsweise kann vorgesehen sein, dass Umfeldsensordaten, welche mittels eines oder mehreren Umfeldsensoren zum sensorischen Erfassen eines Fahrzeugumfelds gebildet wurden, dem Datenerfassungsmodul bereitgestellt werden. Insbesondere können dem Datenerfassungsmodul Navigationsdaten eines Navigationssystems bereitgestellt werden.

Beispielsweise kann das Energieverwaltungsmodul weitere Steuersignale bereitstellen, welche ein Fahrverhalten eines Fahrzeugs beeinflussen bzw. steuern können, um insbesondere in vorteilhafter Weise einen Energiefluss des Fahrzeugs zu optimieren und beispielsweise in vorteilhafter Weise eine übergreifende Reichweitenverwaltung im Fahrzeug zu implementieren bzw. durchzuführen. Vorzugsweise kann das Energieverwaltungsmodul eine Geschwindigkeitsempfehlung für das Fahrzeug, welches insbesondere ein Elektrofahrzeug, das heißt ein Fahrzeug mit einem elektrischen Antrieb, bereitstellen, um bei einem momentanen Batterieladestatus das vorbestimmte Ziel erreichen zu können.

In einer nicht gezeigten Ausführungsform kann das Energieverwaltungsmodul ein Reichweitenschätzungsmodul umfassen. Ein solches Modul schätzt insbesondere basierend auf den derzeit vorhandenen Daten eine Reichweite des Fahrzeugs basierend auf der momentan zur Verfügung stehenden Energie. Insbesondere kann dieses Modul folgende Daten für die Vorausschau auf den Energiehaushalt erfassen: Fahreranforderungen über eine Bedienerschnittstelle, aktuelle Fahrzeugdaten bezüglich eines Energiehaushalts mittels einer Fahrzeugsensorik und Umfelddaten mittels der Umfeldsensorik wie beispielsweise Wetterdaten oder Verkehrsdaten. Diese Umfelddaten können beispielsweise Karten, GPS- oder Radardaten sein.

Diese erfassten Daten gehen insbesondere in Modelle zur Energiespeicherung, Energiebilanz und Verbrauch von Aggregaten, insbesondere Nebenaggregaten, des Fahrzeugs ein. Hierbei kann vorgesehen sein, diese Daten nach Signalqualität und Anzahl einzustufen und dies in dem Funktionsumfang der nachfolgenden Funktionsblöcke zu berücksichtigen. Das heißt also beispielsweise, dass diesen Daten ein entsprechender Gütefaktor zugeordnet wird, wobei die weiteren Steuersignale abhängig von den erfassten Daten und von dem zugeordneten Gütefaktor gebildet werden. Die weiteren Steuersignale steuern dann insofern insbesondere das oder die Steuergeräte des oder der Stellsysteme derart, dass diese lediglich einen Funktionsumfang entsprechend der zur Verfügung stehenden Energie bereitstellen. Beispielsweise kann bei einem zu niedrigen Ladezustand der Batterie eine bestimmte Fahrerassistenzfunktion nicht oder nur eingeschränkt zur Verfügung stehen. Das heißt also vorzugsweise, dass bestimmte Funktionen auf Basis der Anzahl an Signalen und Signalqualität freigegeben werden. Das heißt also insbesondere, dass die Qualität des Umfeldmodells dabei den verfügbaren bzw. frei geschalteten Funktionsumfang beeinflussen kann. Hieraus wird vorzugsweise in vorteilhafter Weise eine Situationsanalyse für ein Reichweitenverwaltungsmodul, welches von dem Energieverwaltungsmodul umfasst ist, abgeleitet.

Die Ergebnisse der Situationsanalyse können in vorteilhafter Weise in eine Betriebsstrategie bzw. Fahrzeugführungsstrategie eingehen. Hier wird dann insbesondere über eine Verteilung der zur Verfügung stehenden Energie bezogen auf einen Fahrzeugantrieb, auf die Aggregate, insbesondere Nebenaggregate und einer Speicherung entschieden. Die Betriebsstrategie entscheidet des Weiteren insbesondere über eine Verwendung der Information. Hierbei kann vorgesehen sein, dass eine reine Informationsausgabe an den Fahrer durchgeführt wird. Beispielsweise kann dem Fahrer mitgeteilt werden, wie hoch die Reichweite des Fahrzeugs noch ist. Vorzugsweise kann vorgesehen sein, dem Fahrer eine Empfehlung bzw. Maßnahme zur Energieminimierung bereitzustellen. Beispielsweise kann dem Fahrer als Empfehlung vorgegeben werden, eine Fahrzeuggeschwindigkeit zu reduzieren. Vorzugsweise kann vorgesehen sein, dass ein autonomer Eingriff in einem Fahrzeugbetrieb über ein entsprechendes Stellsystem durchgeführt wird.

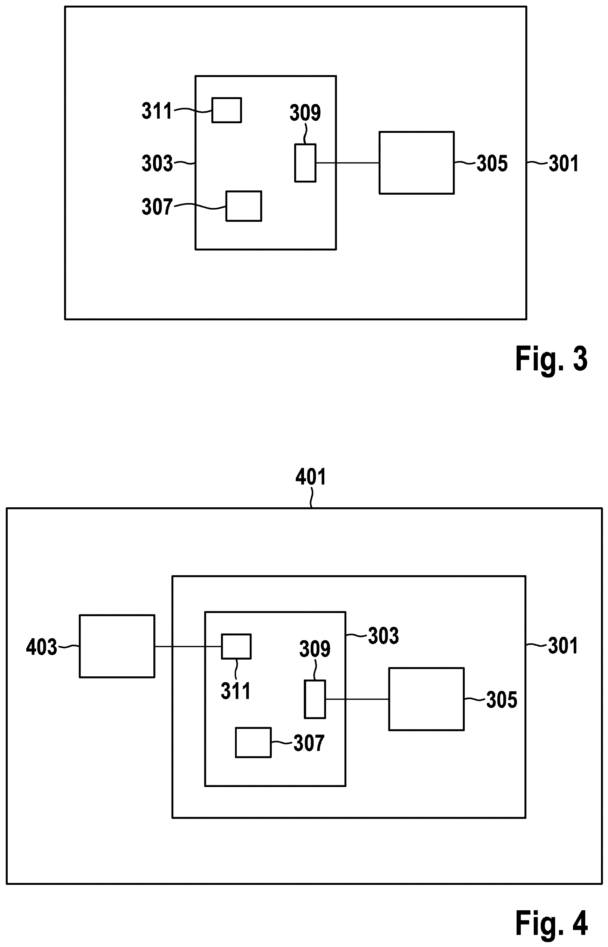

Fig. 3 zeigt eine weitere Vorrichtung 301 zum Betreiben eines Fahrzeugs (nicht gezeigt). Die Vorrichtung 301 umfasst analog zu der Vorrichtung 101 gemäß Fig. 1 ein Fahrzeugbewegungsmodul 303, ein Energieverwaltungsmodul 305 und einen Priorisierer 307. Hierbei ist der Priorisierer 307 in dem Fahrzeugbewegungsmodul 303 integriert. Das Fahrzeugbewegungsmodul 303 umfasst ferner eine Energieverwaltungsschnittstelle 309, an welcher das Energieverwaltungsmodul 305 angekoppelt bzw. angeschlossen ist. Des Weiteren umfasst das Fahrzeugbewegungsmodul 303 eine Stellerschnittstelle 311, an welche insbesondere ein Steuergerät eines Stellsystems des Fahrzeugs angeschlossen bzw. angekoppelt werden kann.

Fig. 4 zeigt ein System 401 zum Betreiben eines Fahrzeugs (nicht gezeigt). Das System 401 umfasst die Vorrichtung 301 gemäß Fig. 3. Das System 401 umfasst ferner ein Steuergerät bzw. eine Steuerung 403 eines nicht gezeigten Stellsystems des Fahrzeugs. Das Steuergerät 403 ist mittels der Stellerschnittstelle 311 mit dem Fahrzeugbewegungsmodul 303 verbunden.

In einer nicht gezeigten Ausführungsform kann vorgesehen sein, dass mehrere Stellerschnittstellen 311 gebildet sind, an welche jeweils ein Steuergerät 403 eines Stellsystems angeschlossen bzw. angekoppelt werden kann.

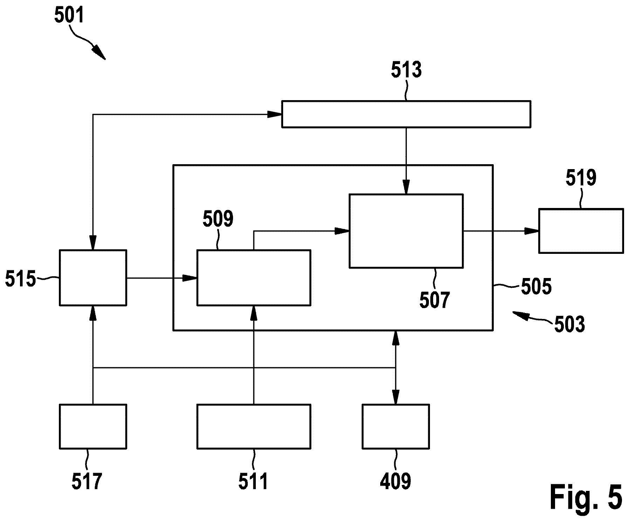

Fig. 5 zeigt ein weiteres System 501 zum Betreiben eines Fahrzeugs. Das System 501 umfasst eine Vorrichtung 503 zum Betreiben eines Fahrzeugs. Die Vorrichtung 503 umfasst ein Signalverwaltungsmodul 505.

Das Signalverwaltungsmodul 505 umfasst ein Fahrzeugbewegungsmodul 507 und ein Fahrzeugumfeldmodul 509. Das Fahrzeugumfeldmodul 509 empfängt Sensorsignale bzw. Umfeldsensordaten von Umfeldsensoren 511 und stellt basierend darauf ein Fahrzeugumfeldmodell dem Fahrzeugbewegungsmodul 507 bereit, so dass dieses insbesondere basierend darauf Steuersignale bildet. Der Übersicht halber sind diese Umfeldsensordaten in Fig. 5 symbolisch mittels eines Rechtecks mit dem Bezugszeichen 511 gekennzeichnet.

Ferner ist ein Energieverwaltungsmodul 513 gebildet, welches über eine entsprechende hier nicht gezeigte Energieverwaltungsschnittstelle mit dem Fahrzeugbewegungsmodul 507 gekoppelt bzw. verbunden ist. Das Energieverwaltungsmodul 513 empfängt Daten einer Fahrzeugumfeldberechnungseinrichtung 515, welches wiederum Daten eines Navigationssystems 517 empfängt umfassend eine digitale Karte. Die Fahrzeugumfeldberechnungseinrichtung 515 berechnet insbesondere ein Fahrzeugumfeld basierend auf den mittels des Navigationssystems 517 bereitgestellten Navigationsdaten. In einer nicht gezeigten Ausführungsform kann vorgesehen sein, dass die Fahrzeugumfeldberechnungseinrichtung 515 noch Daten von anderen Umfeldsensoren von anderen Fahrzeugen bzw. einer Infrastruktur erhält. Diese Daten werden dem Energieverwaltungsmodul 513 bereitgestellt, welches entsprechend weitere Steuersignale bildet und mittels der hier nicht gezeigten Energieverwaltungsschnittstelle dem Fahrzeugbewegungsmodul 507 zur Verfügung stellt. Die Fahrzeugumfeldberechnungseinrichtung 515 kann auch als ein elektronischer Horizont bezeichnet werden, da sie insbesondere ein Fernfeld, beispielsweise ab etwa 300m bezogen auf das Fahrzeug, des Fahrzeugumfelds berechnet. Die Fahrzeugumfeldberechnungseinrichtung 515 ist insbesondere eingerichtet, basierend auf den ihr zur Verfügung gestellten Daten eine Fahrzeugroute zu berechnen.

Die Fahrzeugumfeldberechnungseinrichtung 515 stellt das entsprechend berechnete Fahrzeugumfeld ebenfalls dem Fahrzeugumfeldmodul 509 zur Verfügung. Basierend auf den Sensorsignalen und dem berechneten Fahrzeugumfeld berechnet dann das Fahrzeugumfeldmodul 509 ein Fahrzeugumfeldmodell, was hier auch als ein erweitertes Fahrzeugumfeldmodell bezeichnet werden kann. Dieses erweiterte Modell wird über geeignete Schnittstellen dem Fahrzeugbewegungsmodul 507 zur Verfügung gestellt, welches entsprechend Steuersignale bildet und an Steuergeräte von Stellsystemen des Fahrzeugs ausgibt. Die mehreren Steuergeräte sind hier symbolisch mittels eines Rechtecks mit dem Bezugszeichen 519 gekennzeichnet. Das Signalverwaltungsmodul 503 verwaltet vorzugsweise in vorteilhafter Weise die ihm bereitgestellten Sensorsignale und kann diese beispielsweise nach vorbestimmten Regeln an die Steuergeräte 519 der Stellsysteme analog zu einem Router weiterleiten bzw. senden.

Weiterhin kann insbesondere vorgesehen sein, dass das Energieverwaltungsmodul 513 Informationen über einen Energiehaushalt, insbesondere über eine zur Verfügung stehende Energie, des Fahrzeugs an die Fahrzeugumfeldberechnungseinrichtung 515 übermittelt, so dass diese in vorteilhafter Weise eine momentane Fahrzeugroute bzw. Navigationsroute des Fahrzeugs entsprechend anpasst und/oder optimiert. Vorzugsweise übermittelt die Fahrzeugumfeldberechnungseinrichtung 515 digitale Karten, beispielsweise Topologiedaten, GPS-Daten, Daten externer Fahrzeuge und/oder externer Infrastrukturen an das Energieverwaltungsmodul 513, so dass dieses vorzugsweise in vorteilhafter Weise diese Informationen bei einer Reichweitenberechnung berücksichtigen kann.

Vorzugsweise kann vorgesehen sein, dass das Energieverwaltungsmodul 513 über die Energieverwaltungsschnittstelle Begrenzungen und/oder Stellreserven an das Fahrzeugbewegungsmodul 507 übermittelt. Solche Stellreserven können beispielsweise Stellreserven beim Rekuperieren und/oder eine Begrenzung einer Fahrzeuggeschwindigkeit umfassen.

Vorzugsweise kann vorgesehen sein, dass das Energieverwaltungsmodul 513 über eine Mensch-Maschinen-Schnittstelle Informationen über einen Energiehaushalt und/oder Fahranweisungen und/oder Fahrempfehlungen für eine Fahrzeugsteuerung bzw. Fahrzeugführung an einen Fahrer ausgibt bzw. bereitstellt, beispielsweise mittels eines Bildschirms.

Ein hier der Übersicht halber nicht dargestellter Priorisierer, welcher insbesondere in dem Signalverwaltungsmodul 505 oder in dem Fahrzeugbewegungsmodul 507 integriert sein kann, priorisiert abhängig von einer Fahrzeuglage die Steuersignale des Fahrzeugbewegungsmoduls 507 gegenüber den weiteren Steuersignalen des Energieverwaltungsmoduls 513, um in vorteilhafter Weise eine Stabilisierung des Fahrzeugs durchzuführen.

In einer nicht gezeigten Ausführungsform können die Schnittstellen zu den Umfeldsensoren entweder auf Merkmalsebene, beispielsweise erkannte Kanten bei Video, oder Objektebene, beispielsweise erkanntes Fahrzeug bei Radar oder Video, ausgebildet sein.

Für die Schnittstellen zu den Stellsystemen können vorzugsweise folgende Einflussgrößen auf eine Fahrzeugbewegung vorgesehen sein.

Insbesondere kann eine Längskraft Fₓ bei Aufträgen bzw. Anfragen zum Beschleunigen oder Verzögern als Einflussgröße vorgesehen sein. Bei einem Auftrag bzw. Anfrage für eine Beschleunigung wird ein Motorantriebssystem und/oder Getriebesystem als Stellsystem gesteuert. Bei einem Auftrag für eine Verzögerung wird insbesondere ein ESP und/oder ein Motorantriebssystem und/oder Getriebesystem als Stellsystem über ein entsprechendes Motorschleppmoment und/oder eine Rekuperationsbremsung bei Elektrofahrzeugen gesteuert.

Insbesondere kann als Einflussgröße auch ein Gier-Moment M_{z} bei Aufträgen bzw. Anfragen zur Änderung der Fahrtrichtung als Einflussgröße vorgesehen sein. Hierbei kann über das ESP einseitige Bremseingriffe vorgenommen werden. Über eine elektronische Servolenkung auch EPS genannt, kann über einen nachgeschalteten Lenkmomentregler das angeforderte Gier-Moment in eine Lenkmomentanforderung umgewandelt werden.

Vorzugsweise kann vorgesehen sein, dass die entsprechenden Berechnungen in den einzelnen Komponenten des Systems 501 intern in der jeweiligen Komponente selber durchgeführt werden. Insbesondere kann vorgesehen sein, dass die entsprechenden Berechnungen extern von dem Fahrzeug durchgeführt werden, beispielsweise mittels eines externen Servers. Vorzugsweise kann eine Kombination aus interner und externer Berechnung, also sowohl im System 501 als auch im externen Server, vorgesehen sein. Eine entsprechende Kommunikation zwischen dem Fahrzeug und dem externen Server kann beispielsweise mittels des WLAN-Kommunikationsverfahrens und/oder des long term evolution (Ite)-Kommunikationsverfahrens durchgeführt werden.

Die Erfindung umfasst also insbesondere den Gedanken, dass das Fahrzeugbewegungsmodul Funktionen mit hoher Dynamik und hoher Priorität für eine Fahrzeugführung übernimmt und eine entsprechende Eingriffsstrategie seitens der Stellsysteme bereitstellt. Das Energieverwaltungsmodul übernimmt insbesondere eine übergeordnete, energieoptimierte Fahrzeugführungsstrategie mit geringer Dynamik und niedrigerer Priorität. Die Priorisierung übernimmt dabei der Priorisierer, welcher vorzugsweise in dem Fahrzeugbewegungsmodul integriert sein kann, als zwischengeschalteter Funktionsblock zu den einzelnen Stellsystemen, also insbesondere zu den Wirkketten Antrieb, Bremse, Lenkung und/oder Dämpfung/Federung.

## Patentansprüche

1. Vorrichtung (101, 301, 503) zum Betreiben eines Fahrzeugs, umfassend ein Fahrzeugbewegungsmodul (103, 303, 507) zum Bilden von Steuersignalen für ein Steuergerät (403, 519) eines Stellsystems des Fahrzeugs und ein Energieverwaltungsmodul (105, 305, 513) zum Verwalten einer für einen Fahrzeugbetrieb zur Verfügung stehenden Energie, **dadurch gekennzeichnet, dass** das Energieverwaltungsmodul (105, 305, 513) eingerichtet ist, weitere Steuersignale für das Steuergerät (403, 519) in Abhängigkeit von der zur Verfügung stehenden Energie zu bilden, und wobei ein Priorisierer (107, 307) zum Priorisieren der Steuersignale gegenüber den weiteren Steuersignalen in Abhängigkeit einer Fahrzeuglage und/oder eines Fahrzeugbewegungszustands für eine Stabilisierung des Fahrzeugs gebildet ist.

2. Vorrichtung (101, 301, 503) nach Anspruch 1, wobei der Priorisierer (107, 307) in das Fahrzeugbewegungsmodul (103, 303, 507) integriert ist und das Fahrzeugbewegungsmodul (103, 303, 507) eine Stellerschnittstelle (311) für das Steuergerät (403) und eine Energieverwaltungsschnittstelle (309) für das Energieverwaltungsmodul (105, 305, 513) umfasst.

3. Vorrichtung (101, 301, 503) nach Anspruch 1 oder 2, wobei das Energieverwaltungsmodul (105, 305, 513) ein Datenerfassungsmodul zum Erfassen von für eine Berechnung einer Fahrzeugführungsstrategie relevante Daten umfasst, welches eingerichtet ist, den erfassten Daten einen Gütefaktor zuzuordnen, wobei das Energieverwaltungsmodul (105, 305, 513) ausgebildet ist, abhängig von den erfassten Daten und von dem zugeordneten Gütefaktor die weiteren Steuersignale zu bilden.

4. Vorrichtung (101, 301, 503) nach einem der vorherigen Ansprüche, wobei das Energieverwaltungsmodul (105, 305, 513) eine Mensch-Maschinen-Schnittstelle zum Bereitstellen einer Fahrzeugführungsanweisung entsprechend der zur Verfügung stehenden Energie umfasst.

5. Verfahren zum Betreiben eines Fahrzeugs, wobei ein Fahrzeugbewegungsmodul (103, 303, 507) Steuersignale für ein Steuergerät (403, 519) eines Stellsystems des Fahrzeugs bildet (201) und ein Energieverwaltungsmodul (105, 305, 513) zum Verwalten einer für einen Fahrzeugbetrieb zur Verfügung stehenden Energie weitere Steuersignale für das Steuergerät (403, 519) in Abhängigkeit von der zur Verfügung stehenden Energie bildet (203), wobei abhängig von einer Fahrzeuglage die Steuersignale gegenüber den weiteren Steuersignalen für eine Stabilisierung des Fahrzeugs priorisiert (205) werden.

6. Verfahren nach Anspruch 5, wobei das Energieverwaltungsmodul (105, 305, 513) für eine Berechnung einer Fahrzeugführungsstrategie relevante Daten erfasst, welchen ein Gütefaktor zugeordnet wird, wobei die weiteren Steuersignale abhängig von den erfassten Daten und dem zugeordneten Gütefaktor gebildet werden.

7. Verfahren nach Anspruch 5 oder 6, wobei das Energieverwaltungsmodul (105, 305, 513) mittels einer Mensch-Maschinen-Schnittstelle eine Fahrzeugführungsanweisung entsprechend der zur Verfügung stehenden Energie bereitstellt.

8. System (401, 501) zum Betreiben eines Fahrzeugs, umfassend eine Vorrichtung (101, 301, 503) nach einem der Ansprüche 2 bis 4 soweit rückbezogen auf Anspruch 2, wobei an der Stellerschnittstelle (311) das Steuergerät (403, 519) des Stellsystems und an der Energieverwaltungsschnittstelle (309) das Energieverwaltungsmodul (105, 305, 513) angekoppelt sind.

9. Computerprogramm, umfassend Programmcode zur Ausführung des Verfahrens nach einem der Ansprüche 5 bis 7, wenn das Computerprogramm auf einem Computer ausgeführt wird.

## Claims

1. Device (101, 301, 503) for operating a vehicle, comprising a vehicle movement module (103, 303, 507) for forming control signals for a controller (403, 519) of an actuation system of the vehicle and an energy management module (105, 305, 513) for managing energy available for operating the vehicle, **characterized in that** the energy management module (105, 305, 513) is configured so as to form further control signals for the controller (403, 519) depending on the available energy, and wherein a prioritizer (107, 307) for prioritizing the control signals over the further control signals depending on a vehicle position and/or a vehicle movement state is formed in order to stabilize the vehicle.

2. Device (101, 301, 503) according to Claim 1, wherein the prioritizer (107, 307) is integrated into the vehicle movement module (103, 303, 507) and the vehicle movement module (103, 303, 507) comprises an actuator interface (311) for the controller (403) and an energy management interface (309) for the energy management module (105, 305, 513).

3. Device (101, 301, 503) according to Claim 1 or 2, wherein the energy management module (105, 305, 513) comprises a data acquisition module for acquiring data relevant to calculating a vehicle guidance strategy, which data acquisition module is configured so as to assign the acquired data a quality factor, wherein the energy management module (105, 305, 513) is designed to form the further control signals depending on the acquired data and on the assigned quality factor.

4. Device (101, 301, 503) according to one of the preceding claims, wherein the energy management module (105, 305, 513) comprises a human-machine interface for providing a vehicle guidance instruction in accordance with the available energy.

5. Method for operating a vehicle, wherein a vehicle movement module (103, 303, 507) forms (201) control signals for a controller (403, 519) of an actuation system of the vehicle and an energy management module (105, 305, 513) for managing energy available for operating the vehicle forms (203) further control signals for the controller (403, 519) depending on the available energy, wherein the control signals are prioritized (205) over the further control signals depending on a vehicle position in order to stabilize the vehicle.

6. Method according to Claim 5, wherein the energy management module (105, 305, 513) acquires data relevant to calculating a vehicle guidance strategy and that are assigned a quality factor, wherein the further control signals are formed depending on the acquired data and the assigned quality factor.

7. Method according to Claim 5 or 6, wherein the energy management module (105, 305, 513) provides a vehicle guidance instruction in accordance with the available energy by way of a human-machine interface.

8. System (401, 501) for operating a vehicle, comprising a device (101, 301, 503) according to one of Claims 2 to 4 when referring back to Claim 2, wherein the controller (403, 519) of the actuation system is coupled to the actuator interface (311) and the energy management module (105, 305, 513) is coupled to the energy management interface (309).

9. Computer program comprising program code for executing the method according to one of Claims 5 to 7 when the computer program is executed on a computer.

## Revendications

1. Dispositif (101, 301, 503) servant à faire fonctionner un véhicule, comprenant un module de déplacement du véhicule (103, 303, 507) pour générer des signaux de commande pour un appareil de commande (403, 519) d'un système de réglage du véhicule et un module de gestion de l'énergie (105, 305, 513) pour gérer une énergie disponible pour le fonctionnement du véhicule, **caractérisé en ce que** le module de gestion de l'énergie (105, 305, 513) est conçu pour générer d'autres signaux de commande pour l'appareil de commande (403, 519) en fonction de l'énergie disponible, et dans lequel un élément de priorisation (107, 307) pour prioriser les signaux de commande par rapport aux autres signaux de commande est mis en œuvre en fonction d'une position du véhicule et/ou d'un état de déplacement du véhicule en vue d'une stabilisation du véhicule.

2. Dispositif (101, 301, 503) selon la revendication 1, dans lequel l'élément de priorisation (107, 307) est intégré dans le module de déplacement du véhicule (103, 303, 507) et le module de déplacement du véhicule (103, 303, 507) comprend une interface de système de réglage (311) pour l'appareil de commande (403) et une interface de gestion de l'énergie (309) pour le module de gestion de l'énergie (105, 305, 513).

3. Dispositif (101, 301, 503) selon la revendication 1 ou 2, dans lequel le module de gestion de l'énergie (105, 305, 513) comprend un module d'acquisition de données pour l'acquisition de données pertinentes pour un calcul d'une stratégie de guidage du véhicule, qui est conçu pour affecter un facteur de qualité aux données acquises, dans lequel le module de gestion de l'énergie (105, 305, 513) est conçu pour générer les autres signaux de commande en fonction des données acquises et du facteur de qualité affecté.

4. Dispositif (101, 301, 503) selon l'une des revendications précédentes, dans lequel le module de gestion de l'énergie (105, 305, 513) comprend une interface homme-machine pour la fourniture d'une instruction de guidage du véhicule correspondant à l'énergie disponible.

5. Procédé servant à faire fonctionner un véhicule, dans lequel un module de déplacement du véhicule (103, 303, 507) génère (201) des signaux de commande pour un appareil de commande (403, 519) d'un système de réglage du véhicule et un module de gestion de l'énergie (105, 305, 513) pour gérer une énergie disponible pour le fonctionnement du véhicule génère (203) d'autres signaux de commande pour l'appareil de commande (403, 519) en fonction de l'énergie disponible, dans lequel les signaux de commande sont priorisés (205) par rapport aux autres signaux de commande en fonction d'une position du véhicule en vue d'une stabilisation du véhicule.

6. Procédé selon la revendication 5, dans lequel le module de gestion de l'énergie (105, 305, 513) acquiert des données pertinentes pour un calcul d'une stratégie de guidage du véhicule, auxquelles est affecté un facteur de qualité, dans lequel les autres signaux de commande sont générés en fonction des données acquises et du facteur de qualité affecté.

7. Procédé selon la revendication 5 ou 6, dans lequel le module de gestion de l'énergie (105, 305, 513) fournit, au moyen d'une interface homme-machine, une instruction de guidage du véhicule correspondant à l'énergie disponible.

8. Système (401, 501) servant à faire fonctionner un véhicule, comprenant un dispositif (101, 301, 503) selon l'une des revendications 2 à 4 dans la mesure où il est fait référence à la revendication 2, dans lequel l'appareil de commande (403, 519) du système de réglage est couplé à l'interface de système de réglage (311) et le module de gestion de l'énergie (105, 305, 513) est couplé à l'interface de gestion de l'énergie (309).

9. Programme d'ordinateur comprenant un code de programme servant à mettre en œuvre le procédé selon l'une des revendications 5 à 7 lorsque le programme d'ordinateur est exécuté sur un ordinateur.
